# EUROPEAN PATENT SPECIFICATION

(11) **EP 0 763 186 B1**
(45) Date of publication and mention of the grant of the patent: **17.03.1999**
(21) Application number: 95920288.8
(22) Date of filing: 06.06.1995
(51) Int. Cl.: G01C 11/00, G01C 15/00

(54) **METHOD AND SYSTEM FOR GENERATING AN INTEGRATED MULTIMEDIA DESCRIPTION OF A LOCATION**
VERFAHREN UND SYSTEM ZUM ERZEUGEN EINER INTEGRIERTEN MULTIMEDIABESCHREIBUNG EINES ORTES
PROCEDE ET SYSTEME DE GENERATION D'UNE DESCRIPTION MULTIMEDIA INTEGREE D'UN LIEU

(30) Priority: 03.06.1994 EP 94201581
(43) Date of publication of application: 19.03.1997
(73) Proprietor: Groneman-Van der Hoeven, Anna C., NL-6865 ES Doorwerth (NL)
(72) Inventor: Groneman-Van der Hoeven, Anna C., NL-6865 ES Doorwerth (NL)
(74) Representative: Bartelds, Erik
(86) International application number: NL9500186
(87) International publication number: WO9533974

(56) References cited:
- EP-A- 0 218 750
- DE-A- 3 628 350
- COMPUTER GRAPHICS WORLD, MARCH 1989, USA, vol. 12, no. 3, ISSN 0271-4159, pages 38-39, 41 - 42, 44, 46, LANG L 'GIS goes 3D'

## Description

The invention relates to a method for generating an integrated description of an area formed by multimedia images, in addition to a system for performing this method. Understood here by multimedia images is a combination of (photographic) recordings, perspective drawings and maps.

The collection and display of reliable data characterizing an area is of great importance for a wide variety of applications. These could be for purposes of landscape architecture or building such as the design of new housing estates or green belts, preparation of building projects and the like. It may also be important for administrative applications to have available reliable and realistic data and images, for instance to fix the amount of property tax due.

In existing methods the topographical data required for this purpose is collected "in the field". To this end distances and horizontal directions are determined from different viewing points, generally using a so-called "theodolite", in accordance with particular visible points in the area, from which data maps can then be produced. The same maps are then often supplemented with height data obtained by measurements using levelling instruments. Because all surveys take place in the field there is a great chance of delay as a result of weather conditions and the like. The thus collected measurement data is in practice not combined with optical observations.

In another known method as described in the European patent publication EP-A-0 391 498 topographical data is collected by making photographic recordings from a vehicle at determined viewing points with a so-called "fisheye" lens, from which recordings the desired data can be determined by conversion and measurement. This known method has the drawback that the equipment required is very costly and converting the required data from the "fisheye" recording is time-consuming and laborious. In addition, accurate height measurements are only possible with this method if the surveyed area includes sufficient easily identifiable points. This method is therefore only usable in practice in sufficiently built-up areas.

The invention therefore has for its object to provide an improved method for displaying an area. This is achieved according to the invention by measuring and recording from at least one precisely determined viewing point in the area the distance and direction of a plurality of points characterizing the area, making practically simultaneously a recording of the area from the viewing point and forming from the recorded distances and directions a perspective image of the area corresponding with the recording, and combining the recording with the perspective image. By mutually combining recordings and a small amount of data obtained from measurements in the field an accurate image, designated as "toposcopic" hereinafter, of the area is formed with relatively little effort, which image moreover lends itself well to further processing. New elements can thus be introduced into the perspective image which, when combined with the recording, can be viewed as it were "on site". In this way the effects of changing an existing area can be visualized in simple manner. Further measurements can also be carried out in the recordings with comparatively great accuracy, whereby the amount of fieldwork remains limited. Combining recordings and measurements moreover ensures that the obtained results are reliable since the measurements can be checked with reference to the recordings and the recordings with reference to the measurements.

Preferably applied variants of the method according to the invention are described in the dependent claims 2-7.

The invention also relates to a system for performing the above described method. Such a system is provided according to the invention with means for measuring the distance and direction from at least one precisely determined viewing point to a plurality of visible points, means for recording the measurement data, means for making practically simultaneously a recording of the area from the viewing point and means for forming from the recorded measurement data a perspective image of the area corresponding with the recording, so that the recording is combined with the perspective image.

Preferred embodiments of the system according to the invention form the subject-matter of the dependent claims 9-16.

The invention is now elucidated on the basis of an embodiment, wherein reference is made to the annexed drawing, in which:
Fig. 1 is a schematic view of a measuring arrangement for performing the method according to the invention,
Fig. 2 shows a recording produced with this measuring arrangement,
Fig. 3 shows a perspective image associated with the recording,
Fig. 4 shows a measurement grid for use in the method according to the invention,
Fig. 5 shows schematically measurement in the recording,
Fig. 6 shows a flow diagram of the method according to the invention, and
Fig. 7 shows schematically the structure of a program for processing toposcopic data.

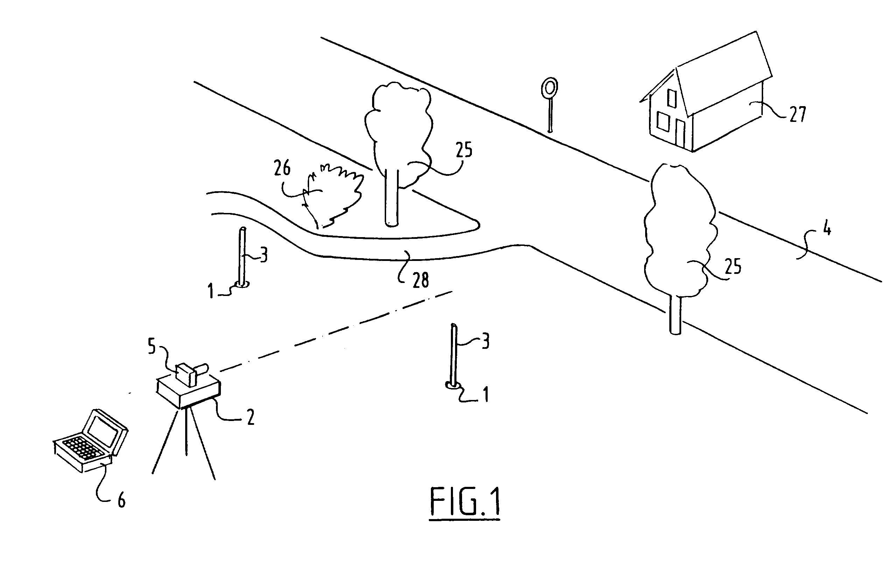

Starting from a number of points with known coordinates, for instance points from the so-called "State Triangulation Survey", a framework of measuring points 1 can be laid for instance by a so-called "traverse" (fig. 1), which points are marked temporarily with pickets or pegs. This framework forms the basis of all other measurements so that the accuracy and reliability are more significant than that of measurements of separate objects and detail points. The work is carried out with a closed traverse or with an open traverse. All kinds of measurements are however made one after another from a determined measuring point. When completed, the measurements of the framework are automatically adjusted. The adjustment relates to angle measurements, distances and height measurements. The distance determinations of the framework and of the detail points take place optically.

Use is made of both continuous levellings and surface levellings. In the measurement of the height differences of the measuring points a levelling rod 3 should be disposed between the measuring points 1. This however involves much extra work, so that the levelling rod 3 is preferably always placed at the following measuring point. Whole distances and height differences between the measuring points 1 can thus be directly determined. This is sufficiently accurate when a levelling instrument 2 is used with built-in compensator. The surface levelling is done from a measuring point to detail points in the surrounding terrain. The progress of a road 4 for instance can thereby be measured or contour lines can be construed. This is an advantage compared to the method described in EP-A-0 391 498, with which no surface levelling can be performed because detail points are not always clearly visible on photos.

As stated, in order to perform the measurements use is made of a levelling instrument 2. The edge can be read with a microscope to 1/100 gon. The device further comprises a good viewer which enlarges for instance 33 times. A camera 5 is fixed to the levelling instrument 2. This camera is fixedly aligned with the viewer of levelling instrument 2 using an adaptor. A possible standard error can be corrected by means of a suitable computer program when the perspective images are made. The horizontal direction of the camera 5 is adjustable.

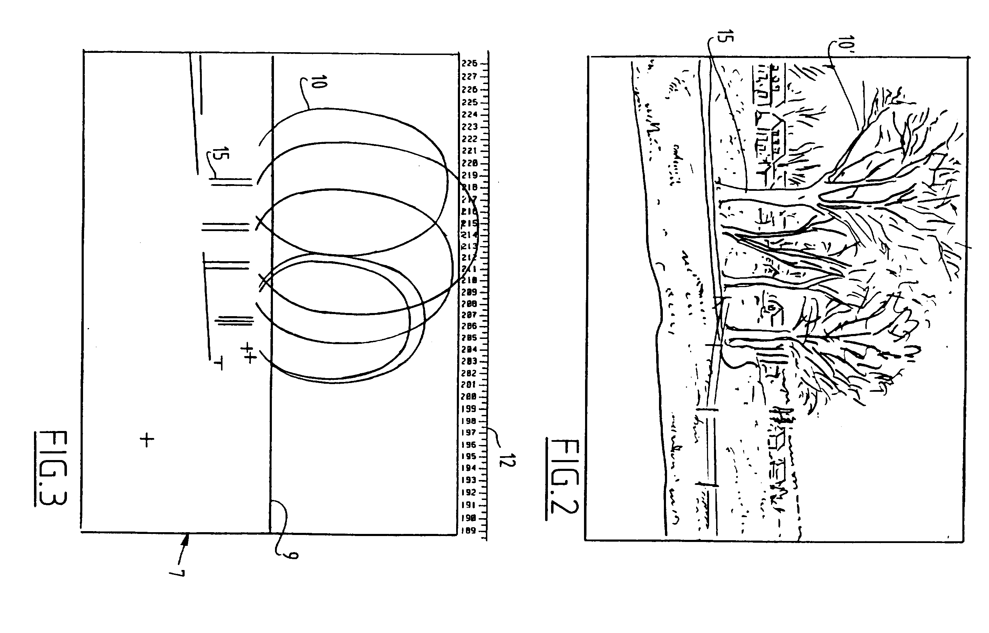

This disposition enables generating of perspectives 7 (fig. 3) at eye level by means of a computer and drawing program, which perspectives correspond precisely with the recordings 8 made (fig. 2). On the one hand these perspectives 7 form a visual control on the correctness of the measurements, which reduces the necessity of control measurements. On the other hand the combination of perspectives 7 and pictures 8 forms a good basis for photo-realistic visualizations of spatial designs in an existing area. The recording and the perspective image are herein entered together in a graphic program and further processed. This method can also be used as design aid. After a design has been drawn into a map the series of perspective images can be produced again in order to see how the design looks in the existing area. This can already be seen to some extent by laying the perspective image printed on transparency over the photo, without using any kind of graphic program.

Special forms can be used for recording measurement data in the field. Entering and processing thereof can take place using the computer. It is of course also possible to enter the data directly into a computer, for instance a portable computer 6. This has the further advantage that the data can be processed on-site and thus checked, thereby enabling immediate repetition of possibly incorrectly performed measurements.

Three programs are used to process the measurement data. A first program offers the option of entering and storing the horizontal angle measurements, distances and supplementary data. A distinction is herein made between objects, height points and measuring points. This program also records from which measuring point and in which direction photos are taken. The second program adjusts the framework data, makes an error analysis, calculates from the measurement data the locations of the measured objects and ensures that the map is drawn automatically. The trees are herein drawn directly to scale with related data concerning crown shape, ground height and individual height. The graphic processing can take place in for instance a two-dimensional CAD program specially adapted for this purpose. From the map data a third program calculates perspective images 7 at eye-level which correspond precisely with the recordings 8 made. By accessing a database with data of the recordings this program can also operate fully automatically. The horizon 9 is drawn precisely in the middle of the perspective image. The perspective images can be drawn and automatically printed on transparencies by the two-dimensional CAD program.

The ground heights do not always have to measured in the field, since they can also be determined by laying the transparencies over the photo. If the foot 15 of a tree 10 is drawn at the height of the closest measuring point and this does not correspond with the foot 15' of the associated tree 10' in the recording 8, the correct height can be calculated with a so-called macro. Herein the tree then only has to be indicated in the known map, the relevant perspective drawing to be identified and the distance of the foot of the tree to the bottom edge of the drawing to be entered. The macro then calculates the correct height value. Such a determination of the ground height is less accurate than in the case of a field measurement but since earth works do not usually have to be performed round a tree, a lesser accuracy at this location is acceptable. A levelling rod can moreover not be arranged at the position of a tree or other object during field measurements but only adjacently thereof, so that in these cases the reading is not very accurate either.

The determination of the height of an object (for example a tree or block of flats) in the photo can likewise be carried out in the above described manner in a macro. Accuracy depends on the distance of the observer from the object and will vary from several centimetres to several decimetres. This is more than adequate for most applications since the heights of trees vary in time and heights of buildings are only important for shadow calculations and visual aspects.

The method lends itself particularly to adding a third dimension to an existing map of for instance a park. In the two-dimensional CAD program a series of height points is then placed along the paths on the map, which points are printed in the perspective image. The actual points can be measured in the photo in the above described manner.

It is also possible by measuring in one photo to determine the location of a point in the photo in the map, provided the height is assumed known. To this end it is necessary to read the gradation bar and enter in a macro the distance to the bottom edge of the perspective frame plus the name of the perspective. This method is of particular interest because it makes it possible to design in the photo and to then translate the result back to the map by measuring in the combination photo/perspective.

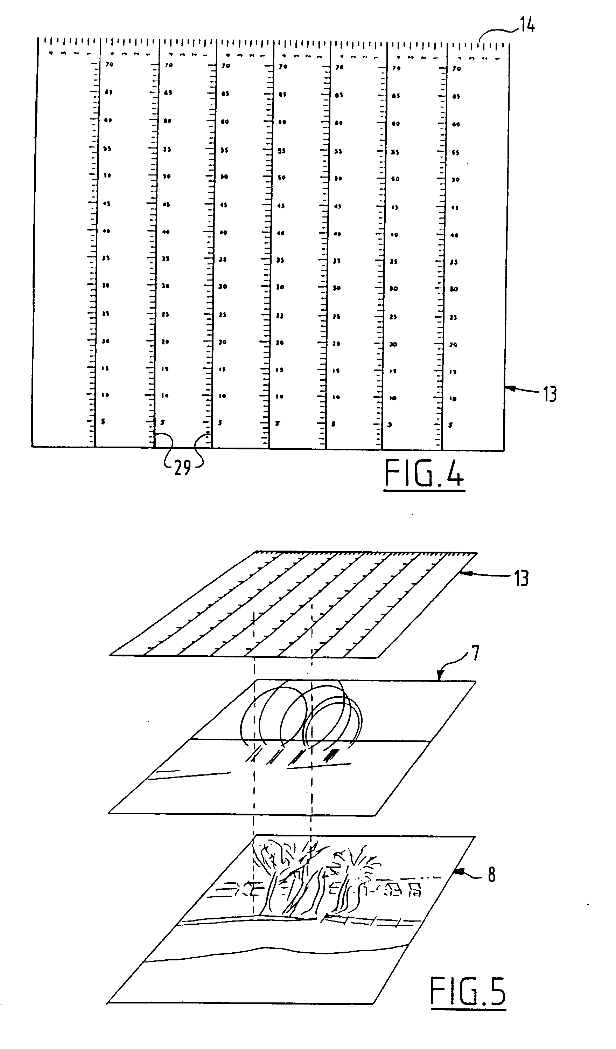

The locations of objects well visible in the recordings, such as trees, can also be determined afterward using the so-called forward incision (fig. 5). Printed for this purpose above each perspective image 7 is a non-linear protractor 12, the middle of which precisely corresponds with the viewing direction. With a specially developed aid 13 (fig. 4), likewise printed on a transparency, it is possible to read the direction of the viewer to the tree. The accuracy which can be achieved here in so-called Polaroid photos amounts to about 1/20 of a degree through use of a type of nonius. The accuracy is thereby not much less than for a measurement in the field. If the relevant tree is also depicted on a third photo, this with the associated perspective image functions as control.

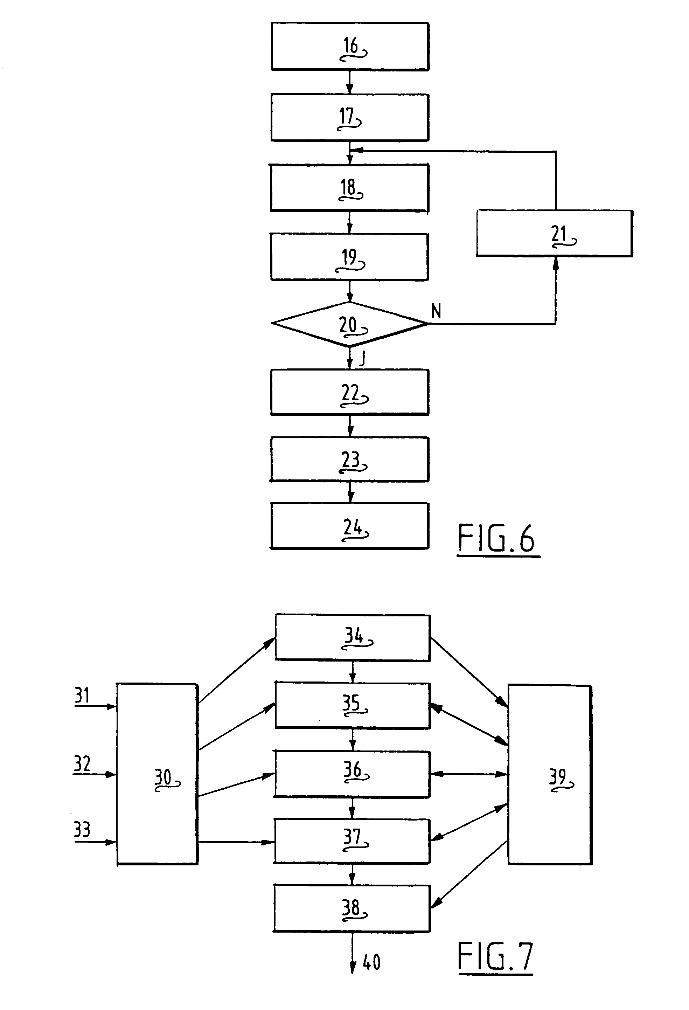

The method according to the invention is shown schematically once again in fig. 6. As first step (block 16) the measurements are performed in the field. At least one recording is therein also made from each measuring point (block 17). The measurement data is subsequently entered into a processing program (block 18), whereafter on the basis thereof one or more perspective drawings are produced (block 19). These perspective drawings are each compared with the associated recording (block 20), whereafter in the case where differences are determined the actual location and height is determined by measurement in the recording (block 21), whereafter the system returns to block 18 where the thus measured data is entered into the processing program. If no or no significant deviations are detected, the recordings can be further used to perform supplementary measurements (block 22). Changes can also be made in for instance the recordings or perspective drawings, for instance new objects can be drawn in, the position, location and dimensions of which can then be determined by measuring in the recording and can be entered in the processing program as further measurement data (block 23). The processing program then finally provides output (block 24), for example in the form of perspective drawings, maps, bird's eye views and the like.

The processing program is built up of a number of modules which make use of a collective database 30 and a number of collective data files or batch files 39. Stored in database 30 is data originating from the framework measurements 31, the detection of objects in the area 32, and the recording of data relating to the different recordings 33. In a first module 34 the locations of the different measuring points are calculated on the basis of the framework data from database 30. These locations are stored in the batch file 39.

The second module 35 calculates the coordinates of the different objects on the basis of the measuring point data from batch file 39 and data relating to the objects from database 30. The starting point here is the distance to a measuring point which has been ascertained by optical means or using a measuring tape. The ground height and the height of the object itself need herein only be entered provisionally as estimates, as this data can be checked relatively simply and if necessary adapted at a later stage. The results of the calculations in module 35 are again written to the batch file 39.

In a module 36 can be calculated the coordinates of height points, that is, points in the terrain whose height has been measured. For this purpose the distance and angle data of the height points are retrieved from the database 30 and converted. These height points can serve for instance to check whether a recording has been taken horizontally. The thus calculated coordinates are once again written to batch file 39.

Data for making the final perspective drawings is then calculated in the module 37. To this end the map data, that is, the coordinator of all measuring points, height points and objects, is retrieved from batch file 39. Data of the different recordings is retrieved from data base 30. The measured angles are thereafter converted and corrected (in surveying a different angular dimension is used) and it is determined which part of the perspective drawing can also be seen in the recording. A right angle is in fact here cut out of the cone of vision. Seven variables of each perspective drawing are calculated and written to a file. Heights and/or locations can hereby be determined in the recordings. It is sufficient for this purpose, when the location of a particular object is known, to measure the distance thereof to the bottom edge of the recording or perspective drawing. From a measured distance and a reading from the printed protractor, it is also possible when the height is known to determine the location of an object in the recording. The data of all perspectives is stored in the form of batch files 39.

Finally, the actual drawing program 38 is accessed which converts into the desired perspective drawing or output 40 the data from batch file 39 as calculated in the preceding program blocks 34-37. In addition to perspective drawings corresponding with the recordings the drawing program 38 can also make maps as well as so-called bird's-eye perspectives from a determined point far above normal eye-level. Such a bird's-eye perspective can of course then no longer be combined and compared with a recording.

From the elucidation above it can be seen that the method and device according to the invention provide with a small amount of fieldwork a wide variety of data which can be applied in many different ways. Thus, in garden and landscape architecture the combination of a map with trees and bushes drawn in to scale and photographic images corresponding therewith, wherein measuring can also take place, forms an ideal starting point for making a good tender for green area management or a renovation of an existing layout. A link has been made between a previously developed program for making an inventory of and calculating layout and maintenance operations.

The method in landscape planning is however different. On the scale level of topographical maps (1:10000 or 1:25000) it is less essential to make an inventory in the field of the types of plant since this can be read very well from aerial photos. Much less measurement need be done because with the device according to the invention the accuracy of the location determinations of the Ordnance Survey can in any case not be improved. It is then possible to limit the location determinations in the field to determining and drawing in the photo points as accurately as possible. In addition, the direction of the recording must be defined very precisely. This preferably takes place on the basis of distant known objects in the map such as high-voltage masts or clearly visible buildings.

Topographical maps are made using aerial photogrammetry. The only operation which is less successful at this level of scale is determining ground heights. This method can make a valuable contribution in this respect. Because the basis of the device is formed by a good quality levelling instrument, a surface levelling can be performed therewith with the usual techniques to produce a contour map.

In applications at a smaller level of scale measured height points and objects are used as calibration points in combining photos with perspectives of designs. In the case of large scale landscaping plans the calibration points may be found by placing a kind of vertical lines in the digital map which correspond with objects clearly discernible in the photo.

The plan and possible alternatives thereto are then also spatially described in the map and the toposcopic perspectives are made. These are combined with the associated photos.

How the method according to the invention can be used as design and visualization aid is illustrated by the following development of an urban development outline plan. During fieldwork the device is first connected onto an existing digitalized land registry map. Once the link has been made it is further sufficient to update the map, take photos, carry out additional height measurements and make an inventory of the existent types of plants. The plan for building for instance new houses is then drawn into the map. For this purpose the map is first entered in a 3D-CAD program. The outline plan can then be developed. After entering the exact data of the recording a rendered photo simulation is then made which can be entered in the recording without further shifting and scaling. A number of trees for instance are then added to the visualization, the location and height of which are exactly calculated. Part of a street may also have been laid which is however not yet mapped. This road can then be extended by eye in the photo simulation, whereafter the result is translated back to the map. Finally, the whole can be further elaborated using photo manipulation.

Another approach to processing the toposcopic measurement data to a three-dimensional drawing which architects and urban planners could use as basis for their design is realized as follows. An additional AutoCAD application is written which can read and process the converted coordinates, photo and object data. The two-dimensional trees are herein converted to three-dimensional trees. This program moreover produces a series of perspective views which correspond substantially with the toposcopic photos and which can of course also contain the design of the new houses as well as the measured trees.

Further advantages are that: (i) the map and perspective images are produced automatically, (ii) the method has a very reasonable cost since use is made of simple software and inexpensive components, and (iii) the method can therefore also be performed in a simple computer. The method is hereby also suitable to be performed entirely in the field, whereby checks can be made on-site as to whether measurements have been carried out properly and can thus be repeated if necessary.

Use can of course also be made of a three-dimensional instead of a two-dimensional CAD program. For measuring distances and directions use can also be made, instead of a levelling instrument, of a so-called "total station", a theodolite with built-in electronic distance measuring device or a GPS instrument.

Instead of a photo camera for making the recording use can of course be made of any other type of device such as a video camera or CCD camera. What is important is that recording and perspective are easy to examine together.

## Claims

1. Method for generating an integrated description of an area formed by multimedia images by measuring and recording from at least one precisely determined viewing point in the area the distance and direction of a plurality of points characterizing the area, making practically simultaneously a recording of the area from the viewing point and forming from the recorded distances and directions a perspective image of the area corresponding with the recording, and combining the recording with the perspective image.

2. Method as claimed in claim 1, **characterized in that** a map of the area associated with the recording and perspective image is derived from the recorded distances and directions.

3. Method as claimed in claim 1 or 2, **characterized in that** a section of the area associated with the recording and perspective image is derived from the recorded distances and directions.

4. Method as claimed in any of the claims 1-3, **characterized in that** the measurements are checked by projecting onto one another the formed perspective image and the associated recording.

5. Method as claimed in any of the foregoing claims, **characterized in that** supplementary elements are entered into the perspective image and these elements are made visible by projecting onto one another the thus supplemented image and the recording.

6. Method as claimed in any of the foregoing claims, **characterized in that** the location or height of a point or object characterizing the area and of which the height or location is known is derived by performing measurements in the recording.

7. Method as claimed in any of the foregoing claims, **characterized in that** in the recording and/or the perspective image indications are arranged of the direction from the viewing point.

8. System for generating an integrated description of an area formed by multimedia images, provided with means (2, 3) for measuring the distance and direction from at least one precisely determined viewing point to a plurality of visible points (1), means for recording the measurement data, means (5) for making practically simultaneously a recording (8) of the area from the viewing point and means for forming from the recorded measurement data a perspective image of the area corresponding with the recording, so that the recording is combined with the perspective image.

9. System as claimed in claim 8, **characterized by** means for deriving a map associated with the recording and perspective image from the recorded measurement data thereof.

10. System as claimed in claim 8 or 9, **characterized by** means for deriving a section associated with the recording and perspective image from the recorded measurement data thereof.

11. System as claimed in any of the claims 8-10, **characterized in that** the recording means are connected to the measuring means.

12. System as claimed in any of the claims 8-11, **characterized in that** the measuring means comprise a levelling instrument.

13. System as claimed in any of the claims 8-12, **characterized in that** the recording means comprise a suitably programmed computer.

14. System as claimed in any of the claims 8-13, **characterized in that** the means for producing the perspective image comprise a suitably programmed computer.

15. System as claimed in claim 13 or 14, **characterized in that** the measuring means and the image producing means are integrated into a single computer.

16. System as claimed in any of the claims 8-15, **characterized in that** the recording means comprise a camera arranged on the levelling instrument.

## Patentansprüche

1. Verfahren zum Erzeugen einer durch Multimediabilder gebildeten, integrierten Beschreibung eines Gebietes, indem von wenigstens einem präzise bestimmten Standpunkt im Gebiet aus die Distanz und die Richtung einer Vielzahl von Punkten gemessen und aufgezeichnet werden, die das Gebiet charakterisieren, praktisch simultan vom Standpunkt aus eine Aufzeichnung des Gebietes gemacht wird und aus den aufgezeichneten Distanzen und Richtungen ein perspektivisches Bild des Gebietes entsprechend der Aufzeichnung gebildet wird und die Aufzeichnung mit dem perspektivischen Bild kombiniert wird.

2. Verfahren nach Anspruch 1,
dadurch **gekennzeichnet**, daß der Aufzeichnung eine Karte des Gebietes zugeordnet ist, und das perspektivische Bild von den aufgezeichneten Distanzen und Richtungen abgeleitet wird.

3. Verfahren nach Anspruch 1 oder 2,
dadurch **gekennzeichnet**, daß ein Abschnitt des Gebietes, der dem aufgezeichneten perspektivischen Bild zugeordnet ist, aus den aufgezeichneten Distanzen und Richtungen abgeleitet wird.

4. Verfahren nach einem der Ansprüche 1 bis 3,
dadurch **gekennzeichnet**, daß die Messungen überprüft werden, indem die gebildeten perspektivischen Bilder und die zugehörigen Aufzeichnungen übereinander projiziert werden.

5. Verfahren nach einem der vorstehenden Ansprüche,
dadurch **gekennzeichnet**, daß in die perspektivischen Bilder ergänzend Elemente eingefügt werden, und daß diese Elemente durch Übereinanderprojizieren des so ergänzten Bildes und der Aufzeichnung sichtbar gemacht werden.

6. Verfahren nach einem der vorstehenden Ansprüche,
dadurch **gekennzeichnet**, daß der Ort oder die Höhe eines Punktes oder Gegenstandes, der das Gebiet charakterisiert und dessen Höhenort bekannt sind, von der Durchführung von Messungen und Aufzeichnungen abgeleitet wird.

7. Verfahren nach einem der vorstehenden Ansprüche,
dadurch **gekennzeichnet**, daß in der Aufzeichnung und/oder dem perspektivischen Bild Angaben der Richtung, ausgehend vom Standpunkt aus, angeordnet sind.

8. System zum Erzeugen einer durch Multimediabilder gebildeten integrierten Beschreibung eines Gebietes, das versehen ist mit Mitteln (2, 3) zum Messen der Distanz und Richtung von wenigstens einem präzise bestimmten Standpunkt aus, für eine Vielzahl von sichtbaren Punkten (1), Mitteln zum Aufzeichnen der Meßdaten, Mitteln (5) zum praktisch simultanen Durchführen einer Aufzeichnung (3) des Gebietes vom Standpunkt aus und Mitteln, um aus den aufgezeichneten Meßdaten ein perspektivisches Bild des Gebietes entsprechend der Aufzeichnung zu machen, so daß die Aufzeichnung mit dem perspektivischen Bild kombiniert ist.

9. System nach Anspruch 8,
**gekennzeichnet** durch Mittel zum Ableiten einer Karte, die dem aufgezeichneten und perspektivischen Bild zugeordnet ist, aus dessen aufgezeichneten Meßdaten.

10. System nach Anspruch 8 oder 9,
**gekennzeichnet** durch Mittel zum Ableiten eines Abschnittes, der dem aufgezeichneten und perspektivischen Bild zugeordnet ist, aus dessen aufgezeichneten Meßdaten.

11. System nach einem der Ansprüche 8 bis 10,
dadurch **gekennzeichnet**, daß die Aufzeichnungsmittel an die Meßmittel angeschlossen sind.

12. System nach einem der Ansprüche 8 bis 11,
dadurch **gekennzeichnet**, daß die Meßmittel ein Nivellierinstrument aufweisen.

13. System nach einem der Ansprüche 8 bis 11,
dadurch **gekennzeichnet**, daß die Aufzeichnungsmittel einen geeignet programmierten Computer aufweisen.

14. System nach einem der Ansprüche 8 bis 13,
dadurch **gekennzeichnet**, daß die Mittel zum Erzeugen des perspektivischen Bildes einen geeignet programmierten Computer aufweisen.

15. System nach Anspruch 13 oder 14,
dadurch **gekennzeichnet**, daß die Meßmittel und die Bilderzeugungsmittel in einem einzigen Computer integriert sind.

16. System nach einem der Ansprüche 8 bis 15,
dadurch **gekennzeichnet**, daß die Aufzeichnungsmittel eine Kamera aufweisen, die auf dem Nivellierungsinstrument angeordnet ist.

## Revendications

1. Procédé destiné à générer une description intégrée d'une zone formée par des images multimédia en mesurant et en enregistrant à partir d'au moins un point d'observation déterminé précisément dans la zone, la distance et la direction d'une pluralité de points caractérisant la zone, réalisant pratiquement simultanément un enregistrement de la zone à partir du point d'observation et formant à partir des distances et directions enregistrées une image en perspective de la zone correspondant à l'enregistrement, et associant l'enregistrement à l'image en perspective.

2. Procédé selon la revendication 1, caractérisé en ce qu'une carte de la zone associée à l'enregistrement et l'image en perspective est déterminée à partir des distances et directions enregistrées.

3. Procédé selon la revendication 1 ou 2, caractérisé en ce qu'une section de la zone associée à l'enregistrement et l'image en perspective est déterminée d'après les distances et directions enregistrées.

4. Procédé selon l'une quelconque des revendications 1 à 3, caractérisé en ce que les mesures sont contrôlées par projection l'une au-dessus de l'autre de l'image en perspective formée et de l'enregistrement associé.

5. Procédé selon l'une quelconque des revendications précédentes, caractérisé en ce que des éléments supplémentaires sont entrés dans l'image en perspective et ces éléments sont rendus visibles par projection l'un au-dessus de l'autre de l'image ainsi complétée et de l'enregistrement.

6. Procédé selon l'une quelconque des revendications précédentes, caractérisé en ce que l'emplacement ou la hauteur d'un point ou d'un objet caractérisant la zone et dont la hauteur ou l'emplacement est connu, est déterminé en effectuant des mesures sur l'enregistrement.

7. Procédé selon l'une quelconque des revendications précédentes, caractérisé en ce que dans l'enregistrement et/ou l'image en perspective, des indications sont agencées concernant la direction par rapport au point d'observation.

8. Système destiné à générer une description intégrée d'une zone formée par des images multimédia pourvu de moyens (2, 3) pour mesurer la distance et la direction à partir d'au moins un point d'observation déterminé précisément, vers une pluralité de points visibles (1), des moyens pour enregistrer les données de mesure, des moyens (5) pour effectuer pratiquement simultanément un enregistrement de la zone à partir du point d'observation et des moyens pour former à partir des données de mesure enregistrées une image en perspective de la zone correspondant à l'enregistrement de façon que l'enregistrement soit associé à l'image en perspective.

9. Système selon la revendication 8, caractérisé par des moyens pour déterminer une carte de la zone associée à l'enregistrement et l'image en perspective à partir des distances et directions enregistrées.

10. Système selon la revendication 8 ou 9, caractérisé par des moyens pour déterminer une section associée à l'enregistrement et l'image en perspective à partir des données de mesure enregistrées de celle-ci.

11. Système selon l'une quelconque des revendications 8 à 10, caractérisé en ce que les moyens d'enregistrements sont connectés au moyen de mesure.

12. Système selon l'une quelconque des revendications 8 à 11, caractérisé en ce que les moyens de mesure comprennent un instrument de mesure de niveau.

13. Système selon l'une quelconque des revendications 8 à 12, caractérisé en ce que les moyens d'enregistrement comprennent un ordinateur convenablement programmé.

14. Système selon l'une quelconque des revendications 8 à 13, caractérisé en ce que les moyens pour produire l'image en perspective comprennent un ordinateur convenablement programmé.

15. Système selon la revendication 13 ou 14, caractérisé en ce que les moyens de mesure et les moyens de production d'image sont intégrés dans un ordinateur unique.

16. Système selon l'une quelconque des revendications 8 à 15, caractérisé en ce que les moyens d'enregistrements comprennent un appareil photographique agencé sur l'instrument de mesure de niveau.
